Europäisches Patentamt

European Patent Office

Office européen des brevets

(19)

(11) Publication number: **0 113 553**
A1

(12) **EUROPEAN PATENT APPLICATION**

(21) Application number: 83307472.7

(22) Date of filing: 08.12.83

(51) Int. Cl.³: **F 02 D 5/02**

(30) Priority: 13.12.82 GB 8235427

(43) Date of publication of application:
18.07.84 Bulletin 84/29

(84) Designated Contracting States:
AT BE CH DE FR GB IT LI LU NL SE

(71) Applicant: SOLEX (U.K.) LIMITED
77 Capitol Park Capitol Way
London, NW9 0EW(GB)

(72) Inventor: Pagdin, Brian Colin
36 Woodlane Rise Studham
Dunstable Bedfordshire(GB)

(72) Inventor: Marriage, David John
Great Green Farm The Rye Eaton Bray
Dunstable Bedfordshire(GB)

(74) Representative: Bernard, Alan Peter et al,
F.J. CLEVELAND & COMPANY 40/43 Chancery Lane
London WC2A 1JQ(GB)

(54) Electronic control apparatus for controlling fuel supply to an internal combustion engine.

(57) Electronic control apparatus for controlling fuel supply to a spark ignition i.c. engine includes a microprocessor based control unit developing fuel metering pulses controlling the opening of an injector valve. The timing of the delivery of the pulses to the injector is controlled by a look-up table in memory so that there is zero delay between top dead centre position of the crankshaft and the valve opening at low speeds but increasing delay, up to 66° with increasing engine speeds. This control improves fuel utilisation.

EP 0 113 553 A1

./...

FIG.2

"ELECTRONIC CONTROL APPARATUS FOR CONTROLLING

FUEL SUPPLY TO AN INTERNAL COMBUSTION ENGINE"

DESCRIPTION

This invention relates to electronic control apparatus for controlling fuel supply to a spark ignition internal combustion engine. In particular the invention concerns electronic control apparatus for producing an electrical signal which determines the opening period of a fuel supply valve. The fuel supply valve may be incorporated for example in an injector operating to inject fuel into the inlet manifold of an internal combustion engine. In another example the valve may control the admission of fuel into a carburetter from where it is drawn into the manifold by engine suction.

It has previously been proposed, for example in a single point fuel injection system, to take account of the different lengths of the manifold between the single injector and each cylinder of a multi-cylinder engine so that the width of a fuel metering pulse developed by the electronic control unit is appropriately adjusted in synchronisation with the sequence of cylinder firings. In such a system it is necessary to monitor the engine cycle to determine which of the cylinders is at its intake stroke at the next fuel injection.

The present invention also concerns the relationship between the position in the engine cycle and the injection of fuel with the aim of improving fuel utilisation. The present invention however relies on the appreciation by the present inventors that improved fuel utilisation can be obtained by controlling the relative timing of the injection of quantities of fuel with respect to the phase of the engine cycle and in particular the dependence of the timing relationship on the speed of the engine.

U.S. Patent Specification No. 4,134,367 describes control circuitry for a fuel injection system in which the start of injection in relation to engine cycle is advanced with increasing engine speeds. The aim of this control is to ensure that there is sufficient time for the pulse of fuel to be delivered to a cylinder and attempts to solve this problem by starting injection earlier in the cycle when the engine speed is increased. This approach is however likely to be at the expense of efficiency of fuel utilisation.

The problem faced in this specification can alternatively be overcome by using injector of greater capacity.

The present invention concerns the problem of improving fuel utilisation and takes into account amongst other factors fuel transit times. The present invention, by contrast, relies on increasing the delay of the pulse delivery with increasing engine speeds.

Therefore according to the present invention there is provided electronic control apparatus for controlling fuel supply to a spark ignition internal combustion engine, the electronic apparatus being connected to receive, in use, electrical signals indicative of sensed values of engine operating parameters, including a signal or signals from which engine speed is derived, and a signal indicative to the phase of the engine cycle, the electronic control apparatus being operative to produce an output signal for controlling a fuel metering pulse, said output signal having a value selected or derived by the electronic control apparatus on the basis of the value of at least one of the sensed operating parameters; wherein the output signals are produced in synchronism with the engine cycle, and characterised in that the timing of the production of said output signals with respect to a reference point in the engine cycle is controlled by the sensed value of engine speed and in that over at least a range of engine speeds the phase angle between said output siganls and the reference point varies with engine speed such that the output signals are delayed with respect to the engine cycle by an amount which increases with increases in engine speed.

The output signals may be produced in a fixed phase relationship with the engine firings at engine speeds up to a predetermined value, and at values greater than the predetermined value, in increasing phase displacement from said fixed phase relationship with increasing engine speed.

An embodiment of the present invention will now be described, by way of example only, with reference to the accompanying drawings. In the drawings:-

Figure 1 is a schematic diagram of relevant mechanical parts of a single point fuel injection system to which the present invention may be applied.

Figure 2 is a block schematic diagram of an electronic control unit; andFigure 3 is a graph of crank angle delay against engine speed for a typical case.

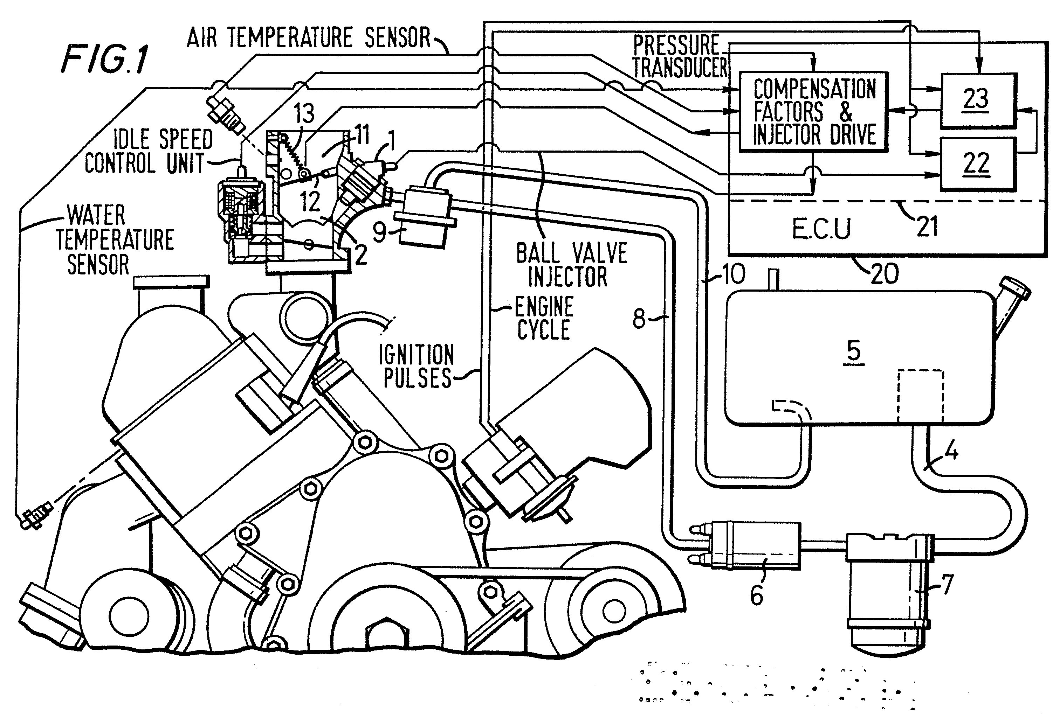

In one example the invention is embodied in a single point fuel injection system applied to a four cylinder petrol engine. Figure 1 illustrates the relevant mechanical components. A single electrically-operated ball valve injector 1 is mounted to direct fuel into the inlet manifold 2 of the engine. The injection nozzle of the valve 1 is angled towards the downstream direction of air flow in the manifold. A throttle valve 3 is pivoted in the inlet manifold chamber downstream of the injector 1 and in which position the injection nozzle is directed generally in the direction of the central pivotal axis of the throttle valve 3.

An outlet pipe 4 is connected from an anti-surge zone in a fuel tank 5 and feeds a fuel pump 6 via a filter unit 7. The fuel pump delivers fuel via a pipe 8 to a pressure regulator 9 close to the injector 1. Surplus fuel is returned to another portion of the fuel tank from the regulator 9 through a return pipe 10.

The quantity of fuel injected into the manifold by the injector 1 is determined by the duration of an electrical pulse produced by a solenoid drive circuit operating to lift the ball valve in the injector. The drive pulse comprises an initial ramp portion typically reaching 4 amps in 1 millisecond to move the ball of the valve followed, after an inductive decay, by a 1 amp holding current for the appropriate period. The width of a single pulse, developed by a microprocessor based control unit 20, determines the drive pulse duration. The signal pulse width is computer on the basis of the sensed values of a number of engine operating parameters.

One of these operating parameters is the air mass flow rate to the throttle valve, which constitutes a measurement of engine loading. The value of this parameter is sensed by a mechanical flap meter 11.

The meter comprises an aluminium flap 12 pivotally mounted about an off-centre axis. A coil spring 13 is connected between a central bracket on the upstream surface of the flap 12 and the wall of the manifold. The spring 13 biases the flap into the closed position shown in Figure 1 where it lies at 15° to a radial plane of the manifold. The flap opens to 90° to provide a 75° operating angle. The spindle of the flap is damped at one end by viscous fluid in a chamber. The other end of the spindle is connected to a rotary potentiometer having a voltage output which increases linearly with the angle of opening of the flap. Typically, the potentiometer produces a 5 volts output at an air flow rate of 12 lb/min.

The second primary parameter on whose value the fuel metering pulse is based is engine speed. The signal used to compute engine speed is obtained from the vehicle ignition circuit, in example, from the four-vane switch of a Hall-effect distributor. After suitable pulse shaping a train of pulses, 'ignition pulse signals', derived from the ignition pulses is fed to the control unit 20.

- 8 -

Other engine parameters are also : need; these include the ambient air temperature and the engine cooling water temperature. The techniques for sensing these parameters are well known. A further relevant parameter is the voltage of the battery, which is sensed by a connection to the nominal 12 volts rail. The actual battery voltage may vary between 8 and 18 volts depending upon battery condition and the number of connected electrical accessories.

A signal indicative of engine phase is also developed by an appropriate sensor and fed to the control unit 20. A suitable method of sensing engine phase is by attaching a vane to the shaft of the distributor to produce an electrical pulse once for each revolution of the engine camshaft. Typically this pulse coincides with the top-dead-centre crank position for cylinder No. 1.

In the Applicants' co-pending EPC Application Agents' Reference APB/OR/0930 the Applicants have described a method of obtaining mass flow into the engine based on the signal developed from the rotary potentiometer of the flap meter. A method by which the mass flow signal is obtained comprises sampling the periodic waveform at fixed sampling intervals during the periods between alternate pairs of ignition pulse signals. The resultant sample values obtained during each such period are integrated to provide a steady mass flow rate signal. An accurate value for the engine speed is derived from the ignition pulse signals by counting the number of samples taken between alternate pairs of successive pulses. Reference is hereby made to said co-pending application for further details of this method.

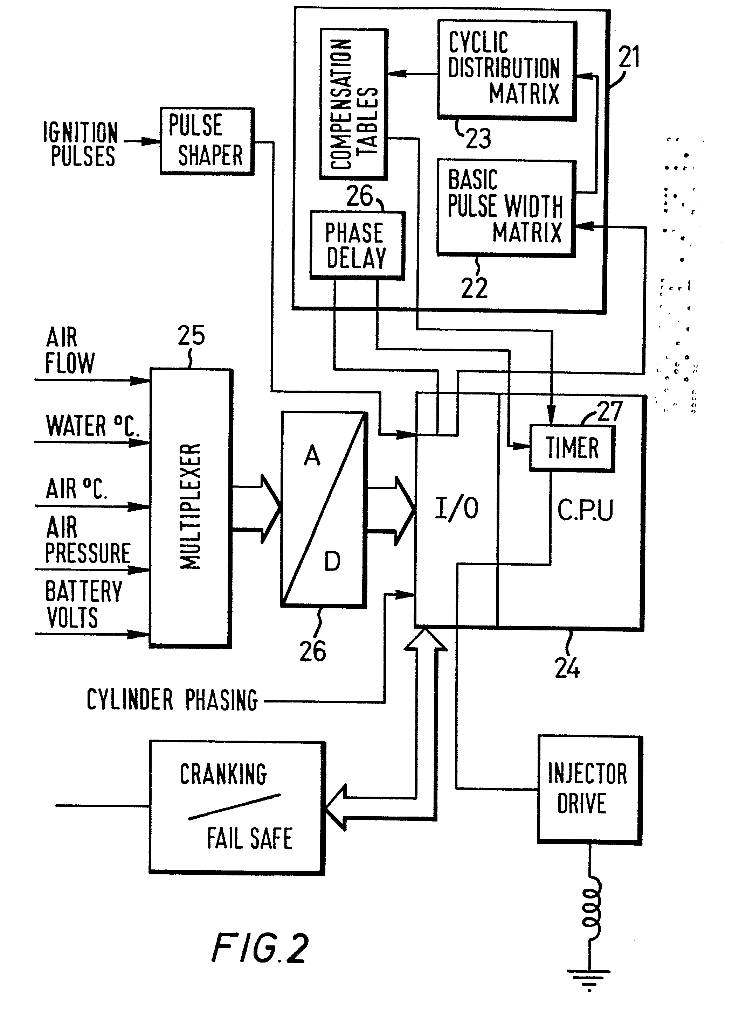

Figure 2 illustrates in block schematic form the electronic control unit 20 and its input and output signals. The data processing capability of the unit is provided by an Intel 8051 microprocessor 24. Analog signals representing the sensed engine parameters of air flow rate, coolant temperature and battery voltage are received as inputs to an analog multiplexer 25. The single multiplexed output signal is then fed to an analog-to-digital converter 26 which converts the analog signal to an 8-bit digital signal. The digital signal is received by the input circuitry of the microprocessor 24 and this circuitry also receives, at another input, the ignition pulse signal indicative of engine speed.

- 10 -

The memory unit 21 in the control unit is a programmable read-only memory which stores the matrices and look-up table of values for the injector pulse width signal.

One output port from the control unit is connected to the solenoid drive circuit controlling injector operation and through which connection the fuel pulse width signal is fed to the drive circuit.

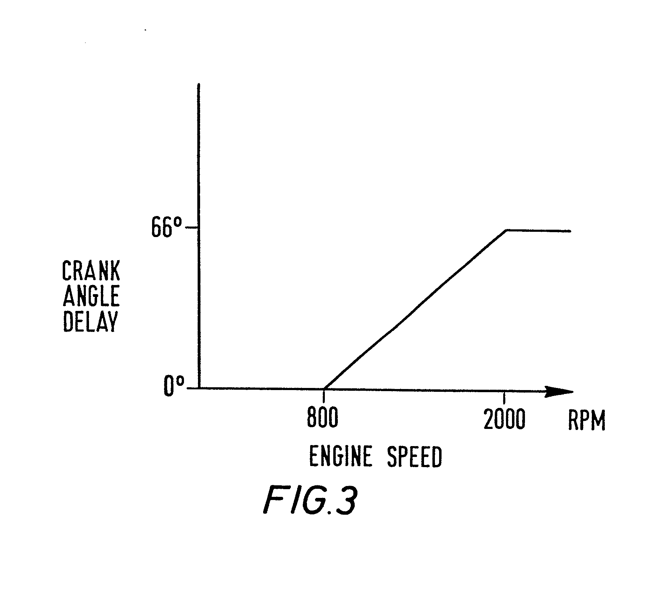

The present invention concerns the timing of the delivery of the fuel pulse width signal to the drive circuit of the injector valve. The memory unit 21 includes a further look-up 26 table which is addressed by the latest computed value of the engine speed. the values stored in the table represent crank angle delays from the top dead centre position. The value read from the table is fed as the data input to a timer 27 in the microprocessor. operation of the timer is set by an ignition pulse signal and continues for the period set at its data input. The fuel pulse width signal appropriate to that ignition pulse signal is delayed by the timing period of the timer. Typically the delay between the top dead centre position of the engine crankshaft and the opening of the fuel injector valve is set at zero for engine speeds up to 800 RPM, and between 800 and 1800 RMP linearly increasing values for the crank angle delay ranging from 0 to $66^{\circ}$ are programmed into the look-up table 26. Above this value the delay is held constant. This typical case is illustrated graphically in Figure 3. It is important that the injector valve opens during the suction stroke of each engine cylinder. The optimum delay depends on a number of factors varying from engine to engine but is basically related to the transit times for the fuel to reach the engine. The most appropriate values can be obtained by experimentation on a particular engine. These values can be programmed into the memory unit for the control unit associated with that type.

In a more sophisticated version of the crank angle delay look-up table the value of the air temperature may also be taken into account so that the look-up table becomes a matrix of the crank angle delays addressed values by both engine speed and air temperature.

CLAIMS

1.   Electronic control apparatus for controlling fuel supply to a spark ignition internal combustion engine, the electronic apparatus being connected to receive, in use, electrical signals indicative of sensed values of engine operating parameters, including a signal or signals from which engine speed is derived, and a signal indicative to the phase of the engine cycle, the electronic control apparatus being operative to produce an output signal for controlling a fuel metering pulse, said output signal having a value selected or derived by the electronic control apparatus on the basis of the value of at least one of the sensed operating parameters; wherein the output signals are produced in synchronism with the engine cycle, and characterised in that the timing of the production of said output signals with respect to a reference point in the engine cycle is controlled by the sensed value of engine speed and in that over

- 13 -

at least a range of engine speeds the phase angle between said output signals and the reference point varies with engine speed such that the output signals are delayed with respect to the engine cycle by an amount which increases with increases in engine speed.

2. Electronic control apparatus as claimed in claim 1 wherein the output signals are produced in a fixed phase relationship with the engine cycle at engine speeds up to a predetermined value, and at values greater than the predetermined value up to a predetermined threshold, in increasing phase displacement from said fixed phase relationship with increasing engine speed.

**FIG.1**

Figure 1 — Engine fuel injection system schematic. Labelled components: AIR TEMPERATURE SENSOR, PRESSURE TRANSDUCER, COMPENSATION FACTORS & INJECTOR DRIVE (23, 22), E.C.U (21, 20), BALL VALVE INJECTOR, ENGINE CYCLE, IGNITION PULSES, IDLE SPEED CONTROL UNIT, WATER TEMPERATURE SENSOR. Reference numerals: 1, 2, 4, 5, 6, 7, 8, 9, 10, 11, 12, 13.

0113553

FIG.2

CRANK
ANGLE
DELAY

66°

0°

800                2000     RPM

ENGINE SPEED

*FIG.3*

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-3 125 085  (KAUFMANN) <br> * Column  1, lines 49-62; column 2, lines 39-59; column 3, lines 9-17; figure 4 * | 1 | F 02 D    5/02 |
| | --- | | |
| Y | GB-A-2 041 573  (LUCAS) <br> * Figures 4,7; page 3, line 104 - page 5, line 77 * | 1,2 | |
| | --- | | |
| A | GB-A-1 448 567  (PHYSICS INTERNATIONAL) <br> * Page 1, line 80 - page 2, line 50;  page  2,  line  77 - page 3, line  65; page 4, line 129 - page 5,  line  48;  page  6, line 91 - page 7, line 23; figures 1,5 * | 1,2 | |
| | --- | | |
| A,D | US-A-4 134 367  (FERRY et al.) <br> * Whole document * | 1 | TECHNICAL FIELDS SEARCHED (Int. Cl. ³) |
| | --- | | F 02 D <br> F 02 P |
| A | EP-A-0 063 375  (HITACHI) <br> * Figures 3,4,8b; pages 1,2; page 3,  line  15  - page 18, line 14; page  23, line 27 - page 25, line 7 * | 1,2 | |
| | --- | | |
| A | FR-A-2 353 713  (V.E.B.) <br> * Whole document * | 1 | |
| | ----- | | |

The present search report has been drawn up for all claims

| Place of search <br> THE HAGUE | Date of completion of the search <br> 26-03-1984 | Examiner <br> LAPEYRONNIE P.J.F. |
|---|---|---|